(19) **Europäisches Patentamt**
**European Patent Office**
**Office européen des brevets**

(11) Publication number : **0 431 628 B1**

(12) # EUROPEAN PATENT SPECIFICATION

(45) Date of publication of patent specification :
**23.08.95 Bulletin 95/34**

(51) Int. Cl.⁶ : **G09G 3/36**

(21) Application number : **90123466.6**

(22) Date of filing : **06.12.90**

(54) **Liquid crystal display device.**

(30) Priority : **07.12.89 JP 318335/89**

(43) Date of publication of application :
**12.06.91 Bulletin 91/24**

(45) Publication of the grant of the patent :
**23.08.95 Bulletin 95/34**

(84) Designated Contracting States :
**DE FR GB NL**

(56) References cited :
**EP-A- 0 303 510**
**EP-A- 0 374 845**
**EP-A- 0 384 229**

(73) Proprietor : **SEIKO EPSON CORPORATION**
**4-1, Nishishinjuku 2-chome**
**Shinjuku-ku Tokyo-to (JP)**

(72) Inventor : **Yamazaki, Katsunori**
**c/o Seiko Epson Corporation,**
**3-5, Owa 3-chome**
**Suwa-shi, Nagano-ken (JP)**

(74) Representative : **Hoffmann, Eckart, Dipl.-Ing. et al**
**Patentanwalt**
**Bahnhofstrasse 103**
**D-82166 Gräfelfing (DE)**

## Description

The present invention relates to a liquid crystal display device.

Heretofore, for driving a simple matrix type liquid crystal display device a driving method called average voltage driving method has generally been used. This driving method leads to an unevenness of the display for the following reasons. A matrix type liquid crystal display device is provided with scanning electrodes and signal electrodes forming picture elements (pixels) at each crossing point between a scanning electrode and a signal electrode. In practice, the electrical resistance of the scanning electrodes and the signal electrodes is not zero and a capacitor is formed at those crossing points with the liquid crystal layer forming the dielectric. Therefore, the effective voltage applied via the scanning electrodes and the signal electrodes to the individual pixels changes in accordance with the content of the display, i.e. the displayed image.

To solve the problem of an uneven display due to the above reason it is known to reverse the polarity of the voltage applied to the liquid crystal panel several times within one frame period. This prior art which is called the "line reverse driving method" is disclosed in the documents JP-A-62-31825, JP-A-60-10195 and JP-A-60-19196. This line reverse driving method is effective for improving the evenness of the display due to the variation of the optical characteristics of the liquid crystal changed by the frequency component of the applied voltage. However, the unevenness cannot be sufficiently removed.

The unevenness of the display can further be improved by a method suggested in the document EP-A-0 303 510, although even with this method the display is still not sufficiently uniform as will be explained below.

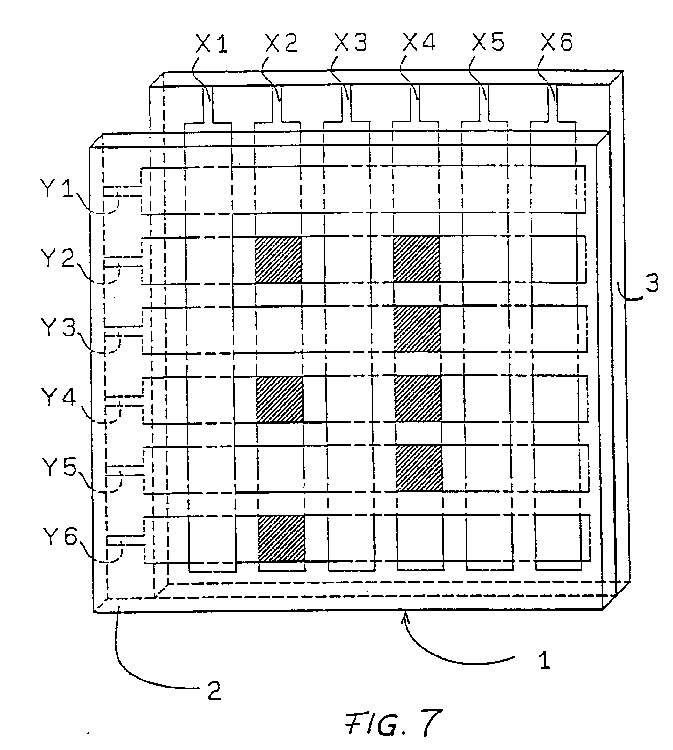

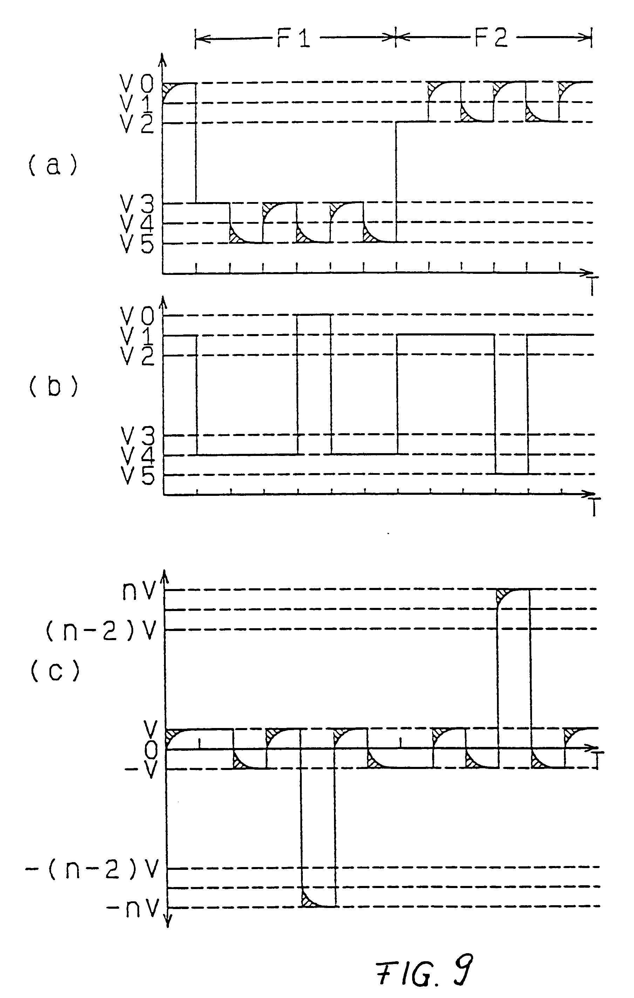

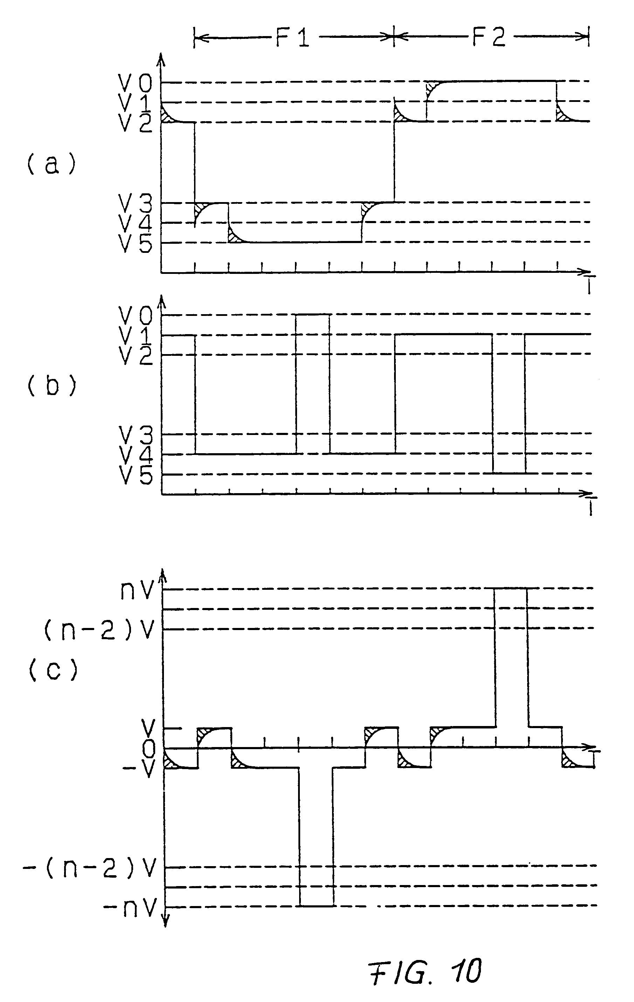

Experiments revealed that the unevenness of the display has been caused by circumstances explained below with reference to Figs. 7 through 10. Fig. 7 schematically shows a display pattern on a liquid crystal panel 1. The liquid crystal panel 1 comprises substrates 2, 3, sandwiching a liquid crystal layer (not shown). A plurality of scanning electrodes Y1 through Y6 is provided on the side of the substrate 2 facing the liquid crystal layer and a plurality of signal electrodes X1 through X6 is provided on the opposing side of the substrate 3. At each crossing area between a scanning electrode Y1 through Y6 and a signal electrode X1 through X6 a pixel is formed. In the display pattern shown in Fig. 7, the hatched pixels are lighted whereas the non-hatched pixels are not lighted. The liquid crystal panel is driven by successively applying a selection voltage to the scanning electrodes Y1 to Y6 in the order of Y1, Y2, ... Y6 and a non-selection voltage to the remaining scanning electrodes. That one of the scanning electrodes, to which the selection voltage is applied, is called the selected scanning electrode whereas the remaining ones are non-selected. In synchronism with the selection of the scanning electrodes, a lighting voltage or a non-lighting voltage is applied to the signal electrodes X1 through X6, depending on whether the pixel formed by the selected scanning electrode and the respective signal electrode is to be lighted or is not to be lighted. The voltage applied to each pixel is the difference between the voltage at the scanning electrode and that at the signal electrode forming the respective pixel. If the effective value of this voltage becomes larger than a predetermined value, the pixel is lighted, i.e. turns dark in a so-called "positive display". In order to avoid a direct current to flow into the liquid crystal panel 1, the applied voltages are reversed every frame, i.e. the period required for successively selecting all of the scanning electrodes Y1 to Y6. In Figs. 9 and 10 F1 designates a first frame and F2 the following second frame.

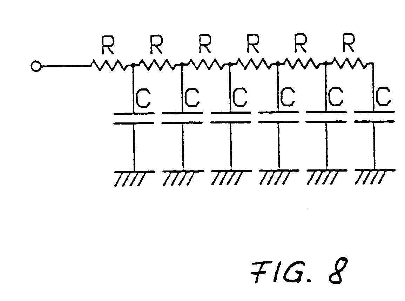

If it is assumed, for the sake of simplification, that the electrical resistance of only the scanning electrodes Y1 to Y6 but not of the signal electrodes X1 to X6 is neglectable, the low pass filter shown in Fig. 8 is formed by each of the signal electrodes X1 to X6 and the capacitors defined by the pixels with the liquid crystal as dielectric. In Fig. 8, R designates the resistance of any of the signal electrodes X1 to X6 between two successive pixels and C designates the capacitor of a pixel. The capacitors are connected to ground via the scanning electrodes whose resistance has been assumed to be zero. The low pass filter shown in Fig. 8 causes a delay or damping, when the polarity of the voltage applied to the signal electrode with respect to the scanning electrode (ground) is reversed. The more frequently such change of the polarity occurs, the smaller becomes the effective voltage between the signal electrode and the scanning electrode. If the signal electrodes X2 and X4 in Fig. 7 are compared for instance, the pixels formed by signal electrode X2 and scanning electrodes Y1 through Y6 will be more strongly affected by the explained low pass filter than the pixels formed by the signal electrode X4 and the scanning electrodes Y1 to Y6. This is due to the fact that to achieve the display pattern shown in Fig. 7, the voltage applied to the signal electrode X2 has to undergo frequent changes, namely non-lighting, lighting, non-lighting, lighting, non-lighting and lighting (starting from the top in Fig.7). By contrast, the changes of the voltage applied to signal electrode X4 to achieve the display pattern shown in Fig. 7 are less frequent, namely non-lighting, lighting, lighting, lighting, lighting and non-lighting (again starting from the top in Fig. 7).

Figs. 9(a) through (c), and 10(a) through (c) show the corresponding waveforms. During the period or frame F1, the voltages V0, V4, V5 and V3 become the selection, the non-selection, the lighting and the non-lighting voltage, respectively. During the period or frame F2 the voltages V5, V1, V0 and V2 become the selection, the non-selection, the lighting and the non-lighting voltage, respectively. Figs. 9(a) shows the waveform of the voltage of the signal electrode X2 in the position of scanning electrode Y4, Fig. 9(b) shows the waveform of the voltage applied to the scanning electrode Y4 and Fig. 9(c) shows the waveform of the difference between these two voltages.

Similarly, Fig. 10(a) shows the waveform of the voltage of the signal electrode X4 in the position of scanning electrode Y4, Fig. 10(b) shows the waveform of the voltage applied to the scanning electrode Y4 and Fig. 10(c) shows the waveform of the difference between these voltages.

In Figs. 9 and 10 the hatched portions indicate the deviation of the practical waveforms from the ideal waveforms. A comparison between Fig. 9(c) and Fig. 10(c) reveals that the deviation in Fig. 9(c) is stronger than that in Fig. 10(c). As a result, in the display pattern of Fig. 7 the hatched pixels of signal electrode X2 will appear brighter than those of the signal electrode X4.

The number of voltage changes between each signal electrode and the scanning electrodes can be uniformed to some extent by the above mentioned line reverse driving method. However, as mentioned before, depending on the display subject or pattern, an unevenness of the display cannot be sufficiently eliminated.

It is an object of the present invention to remedy the above drawback of the prior art and to provide a liquid crystal display device providing a high quality display without the explained unevenness.

This object is achieved with a liquid crystal display device as claimed.

One way of carrying out the invention will be described below in detail with reference to the drawings, which illustrate only one specific embodiment, and in which:

| Fig. 1 | is a block diagram of one embodiment of the present invention, |
|---|---|
| Fig. 2 | is a schematic circuit diagram showing the structure of the liquid crystal display unit, |
| Fig. 3 | shows the structure of the power source circuit, |
| Fig. 4 | is a perspective view of a liquid crystal display panel displaying a specific display pattern, |
| Figs. 5(a) through (c) | are voltage waveforms at the signal electrode X2 and the scanning electrode Y4 to achieve the display pattern along signal electrode X2 in Fig. 4, |
| Figs 6(a) through (c) | show voltage waveforms at the signal electrode X4 and the scanning electrode Y4 to achieve the display pattern along signal electrode X4 in Fig. 4, |
| Fig. 7 | is a perspective view of a liquid crystal panel displaying a specific display pattern according to a conventional technique, |
| Fig. 8 | is an electric equivalent circuit of a part of the liquid crystal panel, |
| Figs. 9(a) through (c) | are voltage waveforms at the signal electrode X2 and the scanning electrode Y4 to achieve the display pattern along signal electrode X2 in Fig. 7, and |
| Figs. 10(a) through (c) | are voltage waveforms at the signal electrode X4 and the scanning electrode Y4 to achieve the display pattern along signal electrode X4 in Fig. 7. |

As described above, the unevenness of the display is caused by a damping or delay effect when the voltage between a signal electrode and a scanning electrode is changed. According to the present invention, this effect can be eliminated by applying to a signal electrode each time that a voltage change undergoes said damping a corrected lighting voltage or a corrected non-lighting voltage instead of the normal lighting voltage or the normal non-lighting voltage, such that the decrease of the effective voltage due to the damping is compensated for. An example of a liquid crystal display device for carrying out such correction will be explained in detail below.

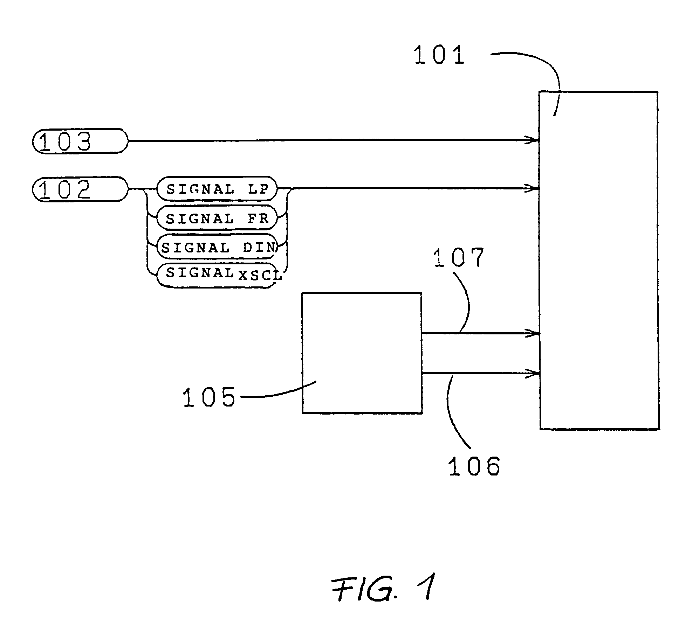

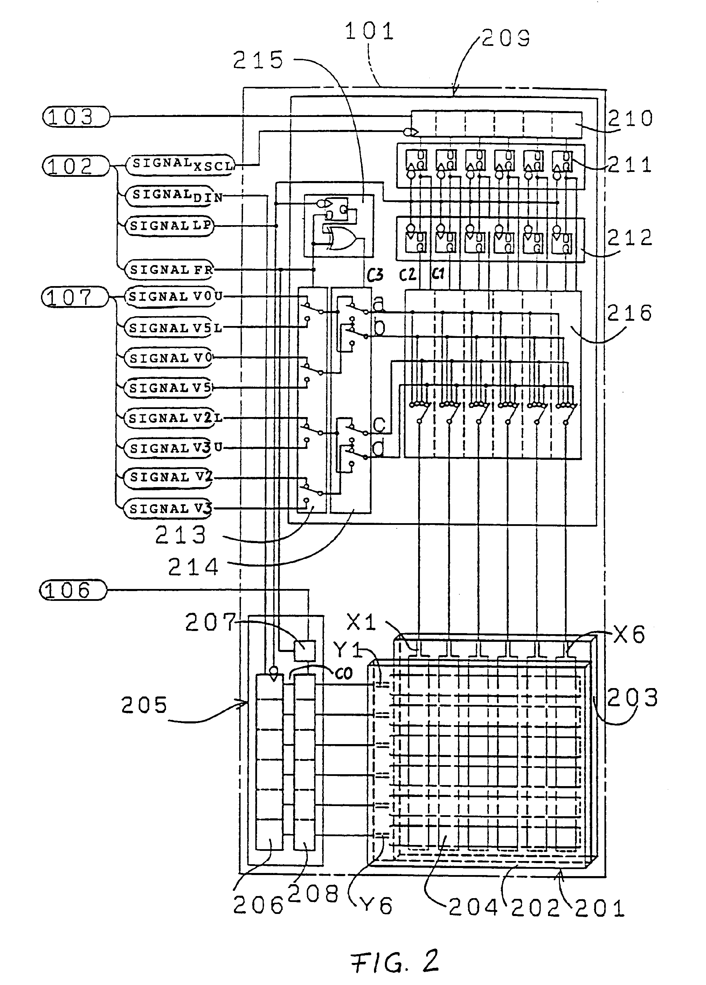

An embodiment of the present invention is shown in Figs. 1 and 2. A liquid crystal display unit 101 comprises a liquid crystal display panel 201, a scanning electrode driving circuit 205 (referred to as "Y-driver" hereinafter) and a signal electrode driving circuit 209 (referred to as "X-driver" hereinafter). 102 designates a sequential control signal for controlling the operation of the liquid crystal display device, the control signal including a latch signal LP, a frame signal FR, a data-in signal DIN, an X-driver shift clock signal XSCL and others. 103 designates a data signal which is used for determining the display pattern. The data signal 103 is varied at the leading edge of the signal XSCL and is supplied to the liquid crystal display unit 101 at the trailing edge thereof. Numeral 105 designates a power source circuit. As will be explained in more detail later, the power source circuit 105 supplies to the liquid crystal display unit 101 first and second groups of Y voltages 106 for driving the scanning electrodes and also first and second groups of X voltages 107 for driving the signal electrodes.

As shown in Fig. 2, the liquid crystal display panel 201 comprises a pair of substrates 202 and 203, sandwiching a liquid crystal layer (not shown) therebetween. On the side of the substrate 202 facing the liquid crystal layer, scanning electrodes Y1 through Y6 are arranged. On the opposing side of the substrate 203 signal electrodes X1 through X6 are arranged to be perpendicular to the scanning electrodes. At each crossing area between a scanning electrode Y1 through Y6 and a signal electrode X1 through X6 a pixel (display dot) 204 is formed. For the sake of simplification, the liquid crystal display panel is shown to have 6 x 6 pixels. It usually has more pixels in a practical embodiment.

The Y-driver 205 comprises a shift register circuit 206, a switching circuit 207 and a level shifter circuit 208. The output terminals of the level shifter circuit 208 are respectively connected to the scanning electrodes Y1 through Y6 of the liquid crystal panel 201. The signal DIN is input into the shift register circuit 206 at the trailing edge of the signal LP and sequentially shifted from stage to stage of the shift register circuit 206 at the trailing edge of the signal LP. The signal DIN assumes high electric potential "H" as the active "1" once every frame, i.e. once within an interval of a number of signals LP corresponding to the number of scanning electrodes Y1 through Y6. Therefore, the data "1" is shifted through the shift register circuit 206 so that with each trailing edge of the signal LP another one of the shift register stages outputs a "1" while all other stages output a "0" as a control signal C0 to the level shifter circuit 208.

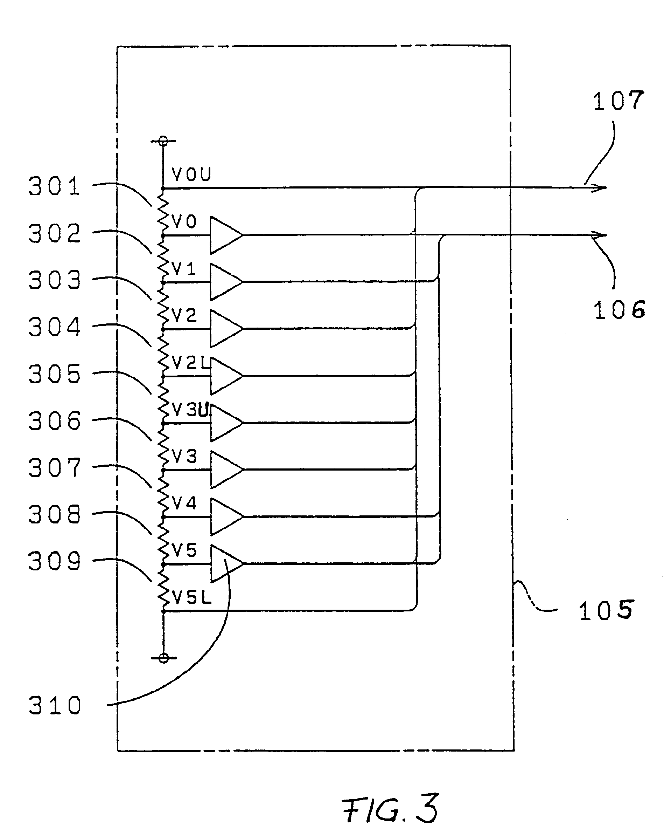

Depending on the signal FR, the switching circuit 207 selects either the first or the second group of Y voltages 106, the first group consisting of voltages V0 and V4 and the second group consisting of voltages V5 and V1 (see Fig. 3). The voltages V0 and V4 are the selection voltage and the non-selection voltage, respectively, of the first group and the voltages V5 and V1 are the selection voltage and the non-selection voltage of the second group. The switching circuit 207 applies either the voltages V0 and V4 or the voltages V5 and V1 to the level shifter circuit 208.

The level shifter circuit 208 is provided with a plurality of switches, each having two input terminals and one output terminal. The output terminal of each switch is connected to a respective one of the scanning electrodes Y1 to Y6. The input terminals of the switches are connected to the output terminals of the switching circuit 207 to receive either the voltages V0 and V4, respectively, or the voltages V5 and V1, respectively. That one of the switches of the level shifter circuit 208 whose control signal C0 from the shift register circuit 206 is "1" connects its output terminal to the input terminal to which the selection voltage (V0 or V5) is applied, while the remaining switches whose control singal C0 is "0" connect their output terminals to the respective input terminal to which the non-selection voltage (V4 or V1) is applied.

With this structure of the Y-driver 205, its operation is as follows. The signal DIN is taken into the shift register circuit 206 in synchronism with the signal LP and is then shifted with each further signal LP. As a result, the level shifter circuit 208 outputs sequentially the selection voltage to one of the scanning electrodes (the selected scanning electrode) and the non-selection voltage to the remaining scanning electrodes. Thus, the scanning electrodes Y1 to Y6 are cyclically selected.

As shown in Fig. 2, the X-driver is provided with a shift register circuit 210, a first latch circuit 211, a second latch circuit 212, a first switching circuit 213, a second switching circuit 214, a detector circuit 215 for detecting a change of the signal FR and a level shifter circuit 216. The output terminals of the level shifter circuit 216 are connected to the signal electrodes X1 to X6, respectively.

The shift register circuit 210 forms a serial-to-parallel converter and receives under the control of the signal XSCL as a clock signal the serial data of the data signal 103 which determine the display pattern, i.e. the lighting or non-lighting status of the pixels (the lighting will be referred to as active "1" and the non-lighting as non-active "0"). Each time one row of data (i.e. one for each signal electrode X1 to X6) has been input into the shift register circuit 210, these data are latched into the first latch circuit 211 under the control of the signal LP. At the same time, the former contents of the first latch circuit 211 is transferred into the second latch circuit 212 by means of the signal LP. The data in the first latch circuit 211 correspond to the pixels of the presently selected scanning electrode whereas the data in the second latch circuit 212 correspond to the pixels of the previously selected scanning electrode. The data of the first and second latch circuits are supplied to respective input terminals of the level shifter 216 as control signals C1 and C2, respectively.

Depending on the signal FR, the first switching circuit 213 selects either the first or the second group of voltages out of the X voltages 107, the first group consisting of voltages V5L, V5, V3 and V3U and the second group consisting of voltages V0U, V0, V2 and V2L. The voltages V5L, V5, V3 and V3U are the corrected lighting voltage, the lighting voltage, the non-lighting voltage and the corrected non-lighting voltage, respectively, of the first group. Similarly, the voltages V0U, V0, V2 and V2L are the corrected lighting voltage, the lighting voltage, the non-lighting voltage and the corrected non-lighting voltage, respectively, of the second group. The first switching circuit applies the voltages of either the first group or the second group to the second switching circuit 214.

The detector circuit 215 detects each change of the signal FR which occurs in synchronism with the signal LP. In the present embodiment, the detector 215 comprises a flipflop circuit and an exclusive OR gate and receives the signal FR as a data signal and the signal LP as a clock signal. When the signal FR is changed in synchronism with the leading edge of the signal LP, a control signal C3 output from the EXCLUSIVE OR gate becomes temporarily active "1" until the output of the flipflop is changed to the new value of the signal FR at the trailing edge of the signal LP. The control signal C3 then becomes non-active "0" again until the next change of the signal FR occurs.

The second switching circuit 214 is controlled by the control signal C3 to output at a first output terminal the corrected lighting voltage as a voltage a, at a second output terminal the lighting voltage as a voltage b, at a third output terminal the corrected non-lighting voltage as a voltage c and at a fourth output terminal the non-lighting voltage as a voltage d, when the control signal C3 is non-active "0". When the control signal C3 is active "1", the second switching circuit 214 outputs as the voltage a at the first output terminal the lighting voltage, as the voltage b at the second output terminal the corrected lighting voltage, as the voltage c at the third output terminal the non-lighting voltage and as the voltage d at the fourth output terminal the corrected non-lighting voltage.

The level shifter circuit 216 selects one of the voltages a, b, c and d output from the second switching circuit 214, depending on the control signals C1 and C2 output from the first and second latch circuits 211 and 212. The control signals C1 and C2 may be either active "1" or non-active "0". The state of the control signals will be indicated in the following way hereinafter: (C1, C2) = (X, Y), where X indicates the state of the control signal C1 and will be either 0 or 1 and Y indicates the state of the control signal C2 and will be either 0 or 1.

In case of (C1, C2) = (1, 1) the level shifter circuit 216 selects the voltage a, in case of (C1, C2) = (1, 0) the voltage b, in case of (C1, C2) = (0, 0) the voltage c and in case of (C1, C2) = (0, 1) the voltage d. The selected voltage is supplied to the corresponding one of the signal electrodes X1 to X6 of the liquid crystal panel 201.

The X-driver having the explained structure operates as follows. The X-driver 209 receives the data signal 103 which determines the lighting or non-lighting of the pixels formed between the scanning electrode Yn in the n-th row and the signal electrodes X1 through Y6 in the shift register circuit 210 during the period during which the scanning electrode Yn-1 of the (n-1)-th row of the liquid crystal panel 201 is selected (n = 1, 2, ... 6, and n = 1 when n-1 = 6). When all data for the n-th row have been inputted into the shift register circuit 210, the data are transferred to the first latch circuit 211 under the control of the signal LP. Namely, the data corresponding to the pixels of the scanning electrode Yn in the n-th row are latched in the first latch circuit. Simultaneously, the data corresponding to the pixels of the scanning electrode Yn-1 of the (n-1)-th row held in the first latch circuit 211 are transferred into the second latch circuit 212.

When the control signal C3 is "0" and the status of the control signals C1 and C2 is given by (C1, C2) = (1, 0), the corrected lighting voltage is output to the corresponding one of the signal electrodes X1 through X6. Similarly, when (C1, C2) = (1, 1), the lighting voltage is output. When (C1, C2) = (0, 1) the corrected non-lighting voltage is output and when (C1, C2) = (0, 0) the non-lighting voltage is output. In other words, when the data in the first and second latch circuits 211 and 212 corresponding to the same signal electrode are different, the corrected lighting or the corrected non-lighting voltage is applied to that signal electrode whereas the lighting or the non-lighting voltage supplied is to the signal electrode if the corresponding data in the first and the second latch circuits are the same.

When the control signal C3 is "1", the situation is just contrary since in that case the corrected voltages and the normal voltages are exchanged for each other. That is, in case of (C1, C2) = (1, 0) the lighting voltage is applied to the corresponding signal electrode, in case of (C1, C2) = (1, 1) the corrected lighting voltage, in case of (C1, C2) = (0, 1) the non-lighting voltage and in case of (C1, C2) = (0, 0) the corrected non-lighting voltage.

With the above explained operation of the Y-driver and the X-driver, the display by the liquid crystal display unit 101 is synchronized with the signals DIN and LP, and while the selection voltage is sequentially applied to the scanning electrodes Y1 to Y6, the corrected or the normal lighting voltage or the corrected or the normal non-lighting voltage is supplied to the signal electrodes X1 to X6 in synchronism therewith and depending on the display pattern.

An example of a concrete structure of the power source circuit 105 is shown in Fig. 3. In Fig. 3, numerals 301 through 309 designate resistors connected in series. To the two ends of the series connection the voltages V0U and V5L, respectively, are applied. The resistors 301 through 309 form a voltage divider circuit, providing the voltages V0, V1, V2, V2L, V3U, V3, V4 and V5 in addition to the terminal voltages V0U and V5L, as shown in Fig. 3. The voltage differences are V0 - V1 = V = V1 - V2 = V3 - V4 = V4 - V5. The voltage difference V2 - V3 is V2 - V3 = k x V wherein k is constant ranging from 1 to 50. The resistance value of each resistor 301 through 309 is selected to meet the following formulas:

$$V0U - V0 = V5 - V5L = \alpha V,$$
$$V2 - V2L = V3U - V3 = \beta V,$$

wherein $\alpha < 1$ and $\beta < 1$.

Numeral 310 in Fig. 3 designates voltage stabilizing circuits for decreasing the impedance of the voltage sources formed by the resistors 301 through 309. The voltage stabilizing circuits comprise voltage follower circuits made up of an operation amplifier and an emitter follower transistor. As shown in Fig. 3, a respective voltage stabilizing circuit 310 is connected to each of the voltage divider points providing the voltages V0 to V5.

The voltages V0, V1, V4 and V5 are supplied to the liquid crystal display unit 101 in Fig. 1 as the Y voltages 106 and the voltages V0U, V0, V2, V2L, V3U, V3, V5 and V5L are supplied as the X voltages 107.

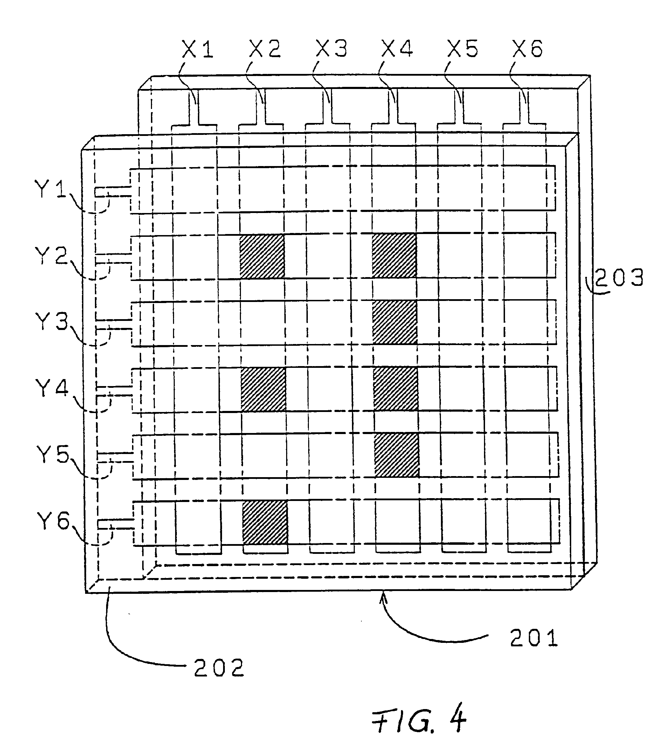

The operation of the present embodiment of the invention will be explained using the specific display pattern shown in Fig. 4. In Fig. 4, the hatched pixels show the lighting state and the non-hatched pixels the non-lighting state. As will be appreciated, in the specific display pattern of Fig. 4 the pixels formed by the signal electrode X2 and the scanning electrodes Y1 to Y6 are alternately non-lighted and lighted with the most upper pixel being non-lighted and the most lower pixel lighted. Of the pixels formed by the signal electrode X4 and the scanning electrodes Y1 to Y6 that corresponding to the scanning electrodes Y1 and Y6 are non-lighted and that corresponding to scanning electrodes Y2 to Y5 are lighted. In the present example, when all scanning electrodes Y1 through Y6 have been successively selected, the voltages applied to the liquid crystal panel are changed. Namely, the signal FR changes each time the scanning electrode Y1 is selected. However, the period of the signal FR is not limited to this case (2s times that of the signal LP when s is the number of scanning electrodes). Instead, the period of the signal FR may be x times that of the signal LP with x being an arbitrary natural number. With x = 4, for instance, the polarity of the voltages applied to the pixels would change every second (= x/2) signal LP.

The data of the first and second latch circuits of the X-driver 209 in Fig. 2 corresponding to the signal electrode X2, the control signal C3 and the voltage applied to the signal electrode X2 when the scanning electrodes Y1 through Y6 are successively selected in this order are listed below. When the scanning electrode Y1 is selected, the data of the first latch circuit 211 becomes 0", the data of the second latch circuit 212 becomes "1", the control signal C3 becomes "1" and the voltage output from the level shifter circuit 216 is the non-lighting voltage, i.e. the status is (0, 1, 1, non-lighting voltage).

Y2 selected: (1, 0, 0, corrected lighting voltage)
Y3 selected: (0, 1, 0, corrected non-lighting voltage)
Y4 selected: (1, 0, 0, corrected lighting voltage)
Y5 selected: (0, 1, 0, corrected non-lighting voltage)
Y6 selected: (1, 0, 0, corrected lighting voltage).

Applying the same scheme to the signal electrode X4 gives
Y1 selected: (0, 0, 1, corrected non-lighting voltage)
Y2 selected: (1, 0, 0, corrected lighting voltage)
Y3 selected: (1, 1, 0, lighting voltage)
Y4 selected: (1, 1, 0, lighting voltage)
Y5 selected: (1, 1, 0, lighting voltage)
Y6 selected: (0, 1, 0, corrected non-lighting voltage.

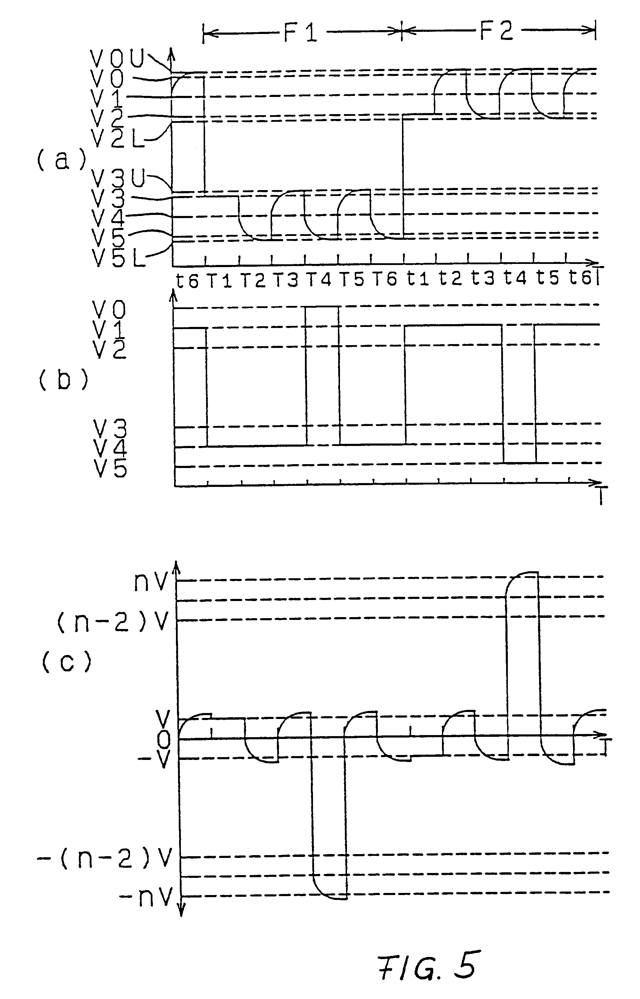

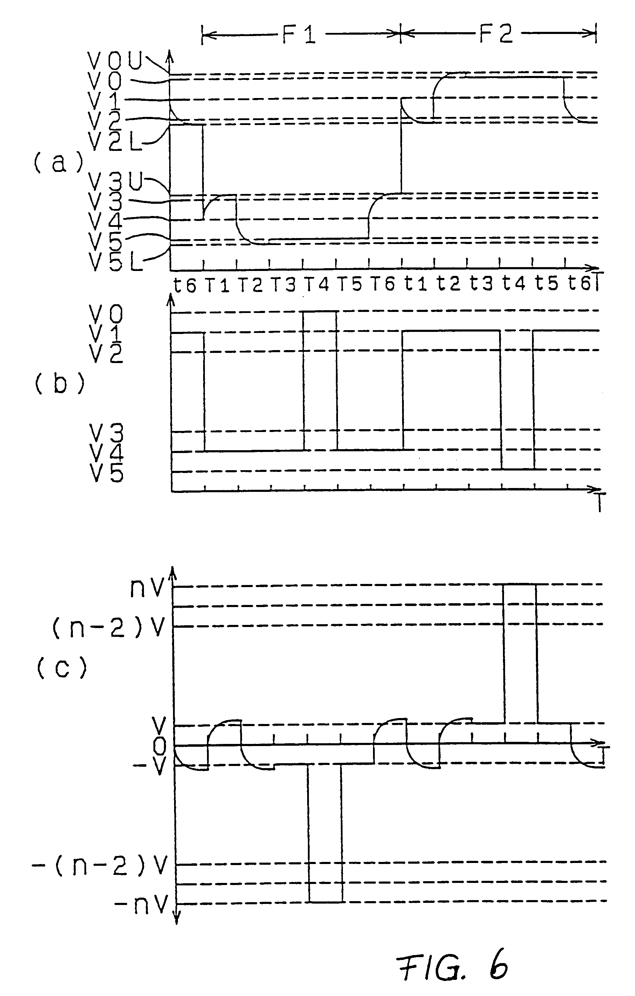

The corresponding voltage waveforms are shown in Figs. 5(a) through (c) and 6(a) through (c). Fig. 5(a) shows the waveform of the voltage of the signal electrode X2 in the position of scanning electrode Y4 resulting in the display pattern of Fig. 4. Fig. 5(b) shows the waveform of the voltage applied to the scanning electrode Y4 and Fig. 5(c) shows the waveform of the difference between the voltage waveforms of (a) and (b).

Similarly, Fig. 6(a) shows the waveform of the voltage of the signal electrode X4 in the position of scanning electrode Y4, Fig. 6(b) shows the waveform of the voltage applied to the scanning electrode Y4 and Fig. 6(c) shows the waveform of the difference between the voltage waveforms of (a) and (b).

T1 through T6 indicate the selection periods of the scanning electrodes Y1 through Y6 within those frames (F1 in Fig. 5) during the first groups of Y and X voltages are applied, and t1 through t6 the corresponding periods during those frames (F2 in Fig. 5) during which the second groups of voltages are applied.

As shown in Fig. 5(a) and (c), when the voltage at the signal electrode X2 changes relative to the non-selection voltage of the scanning electrodes Y1 through Y6 (the periods T2 through T6 and t2 through t6), the damping effect is caused. However, by supplying the corrected lighting voltage and the corrected non-lighting voltage instead of the (normal) lighting voltage and the (normal) non-lighting voltage, the decrease of the effective voltage applied to the pixels is compensated for because the absolute values of the the corrected lighting voltage and the corrected non-lighting voltage relative to the non-selection voltage is larger than those of the lighting voltage and the non-lighting voltage.

In the periods T1 and t1 the non-lighting voltage is applied because the voltage at the signal electrode X2 with respect to the non-selection voltage is not varied and no damping is caused since the change from one group of voltages to the other occurs simultaneously with a change from the lighting condition (the condition in which the corrected lighting voltage or the lighting voltage is applied) to the non-lighting condition (the condition in which the corrected non-lighting voltage or the non-lighting voltage is applied). In this case, therefore, the normal non-lighting voltage and not the corrected non-lighting voltage is applied.

As shown in Figs. 6(a) and (c), when the voltage at the signal electrode X4 relative to the non-selection voltage is not changed (periods T3 through T5 and t3 through t5), the damping is not caused. Therefore, the lighting voltage is applied during these periods.

In the periods T1 and t1 the corrected non-lighting voltage is applied. The reason is that with the transition from period t6 to T1 or from period T6 to t1 the lighting condition is not changed but the voltage group is changed so that the voltage at the signal electrode X4 relative to the non-selection voltage is changed and damping is caused. By applying the corrected non-lighting voltage instead of the normal non-lighting voltage the damping is compensated for.

As described above, when the voltage at any of the signal electrodes X1 through X6 relative to the non-selection voltage is varied, the decrease of the effective voltage applied to the respective pixels is adjusted by applying the corrected lighting voltage and the corrected non-lighting voltage instead of the normal lighting voltage and the normal non-lighting voltage, only to those signal electrodes, where such voltage variation occurs. Thereby, the unevenness of the display can be reduced.

In the present embodiment, the corrected lighting voltage and the corrected non-lighting voltage have been explained to be constant voltages. However, it is possible to define the voltages as the corrected lighting voltage and the corrected non-lighting voltage having the voltage which differs from the lighting voltage and the non-lighting voltage within a predetermined period of time being synchronized with the signal LP. Further, it is possible to have any voltage waveform. Namely, any form of the corrected voltage can be used if the damping caused when the voltage on each signal electrode X1 through X6 relative to the non-selection voltage is varied. Further, it is possible to vary the absolute value of the difference among the corrected lighting voltage, the corrected non-lighting voltage and the non-selection voltage in accordance with the environment temperature, because the electric properties (for example the dielectric constant) of the liquid crystal of the liquid crystal display panel is influenced by the environment temperature in which the liquid crystal display device of the present invention is operated.

## Claims

1. A liquid crystal display device, comprising

a liquid crystal panel (201) having a pair of substrates (202, 203) sandwiching a liquid crystal layer therebetween, a scanning electrode group (Y1-Y6) on one of said substrates (202, 203) and a signal electrode group (X1-X6) on the other of said substrates (202, 203) to form pixels at each crossing area between a scanning electrode (Y1-Y6) and a signal electrode (X1-X6),

first voltage supply means (105, 205) for successively selecting the scanning electrodes (Y1-Y6) by supplying a selection voltage (V0; V5) to a selected scanning electrode (Y1-Y6) and a non-selection voltage (V4; V1) to the remaining scanning electrodes (Y1-Y6), and

second voltage supply means (105, 209) for periodically applying a respective signal voltage, either a lighting voltage or a non-lighting voltage, to the signal electrodes (X1-X6) in accordance with a display pattern to be displayed, the periods being synchronized with the selection by said first voltage supply means (105, 205), said second voltage supply means (105, 209) being adapted to change the voltage level of said lighting and non-lighting voltages depending on the display pattern,

characterized in that said second voltage supply means (105, 209) includes detection means (211, 212, 215, 216) for detecting in each of said periods for each signal electrode (X1-X6) whether or not said display pattern, compared to the preceding period, requires a change of the signal voltage with respect to said non-selection voltage (V4;V1),

said second voltage supply means (105, 209) applying as a signal voltage a first lighting voltage (V5; V0) or a first non-lighting voltage (V3; V2) when no change is required, and a second lighting voltage (V5L; V0U) or a second non-lighting voltage (V3U; V2L) whenever a change is required, wherein the absolute value of the voltage difference between said non-selection voltage (V4; V1) and said first lighting (V5; V0) or non-ligthing (V3; V2) voltage is smaller than that between said non-selection voltage (V4; V1) and said second lighting (V5L; V0U) or non-lighting (V3U; V2L) voltage, respectively.

2. The liquid crystal display device of claim 1, wherein said detection means comprises first storage means (211) for storing display data corresponding to the display pattern of the pixels (204) defined by the presently selected scanning electrode (Y1-Y6) and the signal electrodes (X1-X6) and a second storage means (212) for storing the display data corresponding to the display pattern of the pixels defined by the precedingly selected scanning electrode (Y1-Y6) and the signal electrodes (X1-X6).

3. The liquid crystal display device of claim 1 or 2, wherein each of said first and second voltage supply means (105, 205, 209) comprises switching means (207, 213) for switching between a first and a second group of voltages each group comprising said selection and non-selection voltages (V0, V4; V5, V1) and said signal voltages (V5L, V5, V3, V3U; V0U, V0, V2, V2L) with corresponding voltages of the first group differing from those of the second group such that by switching from one group to the other the polarity of voltages applied to the liquid crystal is changed, said switching means being periodically operated to apply alternating voltages to said liquid crystal panel (201), and wherein said detection means includes a detector circuit (215) for detecting each change between said first and second groups of voltages.

## Patentansprüche

1. Flüssigkristallanzeigevorrichtung, umfassend

eine Flüssigkristalltafel (201) mit einem Paar Substraten (202, 203), die zwischen sich eine Flüssigkristallschicht einschließen, einer Abtastelektrodengruppe (Y1-Y6) auf einem der Substrate (202, 203) und einer Signalelektrodengruppe (X1-X6) auf dem anderen der Substrate (202, 203) zur Bildung von Pixeln an jedem Kreuzungsbereich zwischen einer Abtastelektrode (Y1-Y6) und einer Signalelektrode (X1-X6),

erste Spannungsversorgungsmittel (105, 205) zur sukzessiven Auswahl der Abtastelektroden (Y1-Y6) durch Lieferung einer Wählspannung (V0; V5) an eine ausgewählte Abtastelektrode (Y1-Y6) und einer Nicht-Wählspannung (V4; V1) an die übrigen Abtastelektroden (Y1-Y6), und

zweite Spannungsversorgungsmittel (105, 209) zum periodischen Anlegen einer jeweiligen Signalspannung, entweder einer Leuchtspannung oder einer Nicht-Leuchtspannung, an die Signalelektroden (X1-X6) nach Maßgabe eines anzuzeigenden Anzeigemusters, wobei die Perioden mit der Auswahl durch die ersten Spannungsversorgungsmittel (105, 205) synchronisiert sind und die zweiten Spannungsversorgungsmittel (105, 209) beschaffen sind, den Spannungspegel der Leucht- und der Nicht-Leuchtspannung abhängig von dem Anzeigemuster zu ändern,

dadurch gekennzeichnet, daß die zweiten Spannungsversorgungsmittel (105, 209) Detektormittel (211, 212, 215, 216) enthalten zur Feststellung in jeder der Perioden für jede Signalelektrode (X1-X6), ob das Anzeigemuster, verglichen mit der vorhergehenden Periode, eine Änderung der Signalspannung in bezug auf die Nicht-Wählspannung (V4; V1) erfordert oder nicht,

wobei die zweiten Spannungsversorgungsmittel (105, 209) als eine Signalspannung eine erste Leuchtspannung(V5; V0) oder eine erste Nicht-Leuchtspannung (V3; V2) anlegen, wenn keine Änderung erforderlich ist, und eine zweite Leuchtspannung (V5L; V0U) oder eine zweite Nicht-Leuchtspannung (V3U; V2L) anlegen, wann immer eine Änderung erforderlich ist, wobei der Absolutwert der Spannungsdifferenz zwischen der Nicht-Wählspannung (V4; V1) und der ersten Leucht- (V5; V0) oder Nicht-Leuchtspannung (V3; V2) kleiner ist als derjenige zwischen der Nicht-Wählspannung (V4; V1) und der zweiten Leucht- (V5L; V0U) bzw. Nicht-Leuchtspannung (V3U; V2L).

2. Flüssigkristallanzeigevorrichtung nach Anspruch 1, bei der die Detektormittel erste Speichermittel (201) zur Speicherung von Anzeigedaten entsprechend dem Anzeigemuster der Pixel (204), die von der momentan ausgewählten Abtastelektrode (Y1-Y6) und den Signalelektroden (X1-X6) gebildet werden, und ein zweites Speichermittel (212) zur Speicherung der Anzeigedaten entsprechend dem Anzeigemuster der Pixel, die von der vorangehend ausgewählten Abtastelektrode (Y1-Y6) und den Signalelektroden (X1-X6) gebildet werden, umfaßt.

3. Flüssigkristallanzeigevorrichtung nach Anspruch 1 oder 2, bei der jede der ersten und der zweiten Spannungsversorgungsmittel (105, 205, 209) Schaltermittel (207, 213) umfaßt zum Schalten zwischen einer ersten und einer zweiten Gruppe von Spannungen, wobei jede Gruppe die Wähl- und Nicht-Wählspannungen (V0, V4; V5, V1) und die Signalspannungen (V5L, V5, V3, V3U; V0U, V0, V2, V2L) umfaßt, wobei entsprechende Spannungen der ersten Gruppe sich derart von solchen der zweiten Gruppe unterscheiden, daß durch Schalten von einer Gruppe zur anderen die Polarität der an den Flüssigkristall angelegten Spannungen geändert wird, wobei die Schaltermittel periodisch betätigt werden, damit Wechselspannungen an die Flüssigkristalltafel (201) angelegt werden, und wobei die Detektormittel eine Detektorschaltung (215) enthalten zur Feststellung jeder Änderung zwischen der ersten und der zweiten Gruppe von Spannungen.

**Revendications**

1. Un dispositif de visualisation à cristal liquide, comprenant

   un panneau à cristal liquide (201) ayant une paire de substrats (202, 203) entre lesquels est intercalée une couche de cristal liquide, un groupe d'électrodes de balayage (Y1-Y6) sur l'un des substrats (202, 203) et un groupe d'électrodes de signal (X1-X6) sur l'autre substrat (202, 203), pour former des pixels dans chaque zone d'intersection entre une électrode de balayage (Y1-Y6) et une électrode de signal (X1-X6),

   des premiers moyens d'application de tension (105, 205) pour sélectionner successivement les électrodes de balayage (Y1-Y6) par l'application d'une tension de sélection (V0; V5) à une électrode de balayage sélectionnée (Y1-Y6) et une tension de non-sélection (V4; V1) aux électrodes de balayage restantes (Y1-Y6), et

   des seconds moyens d'application de tension (105, 209) pour appliquer périodiquement une tension de signal respective, qui est soit une tension d'éclairage, soit une tension de non-éclairage, aux électrodes de signal (X1-X6), conformément à une configuration de visualisation à visualiser, les périodes étant synchronisées avec la sélection par les premiers moyens d'application de tension (105, 205), les seconds moyens d'application de tension (105, 209) étant conçus pour changer le niveau de tension des tensions d'éclairage et de non-éclairage sous la dépendance de la configuration de visualisation,

   caractérisé en ce que les seconds moyens d'application de tension (105, 209) comprennent des moyens de détection (211, 212, 215, 216) pour détecter dans chacune des périodes pour chaque électrode de signal (X1-X6) si, en comparaison avec la période précédente, la configuration de visualisation exige ou non un changement de la tension de signal par rapport à la tension de non-sélection (V4; V1),

   les seconds moyens d'application de tension (105, 209) appliquant à titre de signal de tension une première tension d'éclairage (V5; V0) ou une première tension de non-éclairage (V3; V2) lorsque aucun changement n'est exigé, et une seconde tension d'éclairage (V5L; V0U) ou une seconde tension de non-éclairage (V3U; V2L) chaque fois qu'un changement est exigé, la valeur absolue de la différence de tension entre la tension de non-sélection (V4; V1) et la première tension d'éclairage (V5; V0) ou de non-éclairage (V3; V2) étant inférieure à celle entre la tension de non-sélection (V4; V1) et la seconde tension d'éclairage (V5L; V0U) ou de non-éclairage (V3U; V2L), respectivement.

2. Le dispositif de visualisation à cristal liquide de la revendication 1, dans lequel les moyens de détection comprennent des premiers moyens d'enregistrement (211) pour enregistrer des données de visualisation correspondant à la configuration de visualisation des pixels (204) qui sont définis par l'électrode de balayage (Y1-Y6) sélectionnée au moment présent et par les électrodes de signal (X1-X6), et des seconds moyens d'enregistrement (212) pour enregistrer les données de visualisation correspondant à la configuration de visualisation des pixels définis par l'électrode de balayage (Y1-Y6) sélectionnée précédemment et par les électrodes de signal (X1-X6).

3. Le dispositif de visualisation à cristal liquide de la revendication 1 ou 2, dans lequel chacun des premiers et seconds moyens d'application de tension (105, 205, 209) comprend des moyens de commutation (207, 213) pour commuter entre des premier et second groupes de tensions, chaque groupe comprenant les tensions de sélection et de non-sélection (V0, V4; V5, V1) et les tensions de signal (V5L, V5, V3, V3U; V0U, V0, V2, V2L), des tensions correspondantes du premier groupe différant de celles du second groupe d'une manière telle que par la commutation d'un groupe vers l'autre, la polarité de tensions appliquées au cristal liquide soit changée, ces moyens de commutation étant actionnés périodiquement pour appliquer des tensions alternatives au panneau à cristal liquide (201), et dans lequel les moyens de détection comprennent un circuit détecteur (215) pour détecter chaque changement entre les premier et second groupes de tensions.

FIG. 1

FIG. 2

FIG. 3

FIG. 4

FIG. 5

FIG. 6

FIG. 7

FIG. 8

FIG. 9

FIG. 10